(19) Europäisches Patentamt
European Patent Office
Office européen des brevets

(11) **EP 1 992 102 B1**

(12) **FASCICULE DE BREVET EUROPEEN**

(45) Date de publication et mention de la délivrance du brevet:
**27.10.2010 Bulletin 2010/43**

(21) Numéro de dépôt: **07731671.9**

(22) Date de dépôt: **27.02.2007**

(51) Int Cl.:
*H04L 9/12* *(2006.01)*    *H04J 3/06* *(2006.01)*

(86) Numéro de dépôt international:
**PCT/FR2007/050854**

(87) Numéro de publication internationale:
**WO 2007/101956 (13.09.2007 Gazette 2007/37)**

(54) **SYNCHRONISATION CRYPTOGRAPHIQUE ENTRELACEE**

VERSCHACHTELTE KRYPTOGRAFISCHE SYNCHRONISATION

INTERLEAVED CRYPTOGRAPHIC SYNCHRONIZATION

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **06.03.2006 FR 0601951**

(43) Date de publication de la demande:
**19.11.2008 Bulletin 2008/47**

(73) Titulaire: **EADS Secure Networks**
**78990 Elancourt (FR)**

(72) Inventeur: **ROUSSEAU, Frédéric**
**F-78180 Montigny Le Bretonneux (FR)**

(74) Mandataire: **Lapoux, Roland et al**
**Bloch & Bonnétat**
**23bis, rue de Turin**
**75008 Paris (FR)**

(56) Documents cités:
**WO-A-2004/014019    US-A- 6 044 085**
**US-A1- 2003 037 297**

- **FINAL DRAFT ETSI EN 302 109 V1.1.1 (2003-06): "Terrestrial Trunked Radio (TETRA); Security; Synchronization mechanism for end-to-end encryption" juin 2003 (2003-06), , PAGES 1-17 , XP002402074 cité dans la demande alinea 4.2, 4.4.1, 4.4.4 et 4.4.5**

**Description**

La présente invention se rapporte à une synchronisation appliquée à un flux de données structuré en des super-trames formées chacune de blocs de trames, particulièrement dans un contexte de cryptographie de données de manière à synchroniser des émetteurs et des récepteurs dans des équipements transmettant entre eux un flux de données chiffrées en temps réel.

Elle trouve des applications notamment dans le domaine des télécommunications sécurisées.

Préalablement les termes suivants sont définis :

trame : une séquence binaire, par exemple issue d'une itération d'un module cryptographique, de longueur $S_{trame}$ ($S_{trame} \geq 1$ bit) ;
bloc : un groupe de n trames consécutives, avec $n \geq 1$ ;
super-trame : un groupe formé de p blocs consécutifs, avec $p \geq 1$ ;
flux de données chiffrées : une succession de super-trames.

Les termes trame, bloc et super-trame définis ci-dessus au titre d'un flux applicatif entre des équipements terminaux distants ne préjugent pas de la structuration sous-jacente des flux par le service support de transmission ("bearer service" en anglais) : une super-trame, ou un bloc ou une trame, émis par une application peut par exemple correspondre à un paquet non segmenté transmis en couche de transport.

A cet égard, il est bien connu qu'un bloc comprenant un entête avec un mot de synchronisation, et plusieurs trames consécutives soit désigné par trame ou multi-trame dans certaines applications. Par exemple, la demande de brevet US 2003/0037297 divulgue, pour un multiplexage à division du temps connu, un bloc comprenant un entête incluant un mot de synchronisation indivisible "a", des trames consécutives comprenant chacune un mot de synchronisation "b", et finalement un champ de contrôle d'erreur. Dans un récepteur, le mot de synchronisation "b" est répété dans les trames d'un bloc et est utilisé, conjointement à au moins une détection du mot de synchronisation "a", pour acquérir une synchronisation de bloc plus rapidement qu'une synchronisation qui ne serait basée que sur une détection du mot de synchronisation "a" dans des blocs consécutifs.

La mise en oeuvre de communications sécurisées engendre comme difficulté que des récepteurs dans les équipements doivent être synchronisés ou resynchronisés suffisamment rapidement avec un flux de données chiffrées. Les spécifications des suites cryptographiques connues ne considèrent qu'une seule hypothèse sur la fréquence des synchronisations cryptographiques, dimensionnées sur des constantes de temps associées à un réseau sous-jacent donné. Ceci est problématique pour un flux de données chiffrées de bout en bout dont les équipements terminaux opèrent dans des réseaux hétérogènes. Par exemple, pour une communication point-à-point ou pour une téléconférence, les équipements terminaux de communication peuvent être divers : un équipement terminal peut être attaché à un réseau filaire, un deuxième équipement terminal peut être situé dans une cellule d'un réseau de radiocommunication cellulaire pour mobiles, un troisième équipement terminal est un terminal de communication par satellite, et un quatrième équipement terminal est un appareil radio HF fonctionnant avec des sauts de fréquence.

Une transmission d'un flux de données chiffrées entre des équipements terminaux fixes d'un réseau filaire dont le service de communication est fiable ne nécessité essentiellement qu'une synchronisation cryptographique lente.

Une transmission d'un flux de données chiffrées via un réseau dont certains segments assurent des transmissions non fiables, par exemple des transmissions radio, peut conduire certains récepteurs à ne pas recevoir l'ensemble intègre des informations de synchronisation cryptographique nécessaires au traitement du flux de données chiffrées ou peut conduire certains récepteurs à perdre le synchronisme nécessaire entre le déchiffrement et la réception de trames du flux de données chiffrées. Un procédé de resynchronisation rapide est alors nécessaire.

Une synchronisation rapide est également nécessaire lorsqu'un équipement terminal de la communication requiert un transfert intercellulaire ("handover" en anglais) ou une re-sélection de cellule annoncée ("announced cell reselection" en anglais), c'est-à-dire lorsque le flux de données chiffrées change de canal de transmission, ce qui interrompt temporairement la réception et fait perdre le synchronisme cryptographique à l'équipement terminal.

Une synchronisation rapide est aussi nécessaire lorsqu'un équipement terminal souhaitant participer à une communication chiffrée déjà commencée entre d'autres équipements terminaux requiert une entrée tardive ("late entry" en anglais) dans la communication.

En outre, une synchronisation rapide est utile lorsque le flux de données chiffrées reçu continûment par un récepteur pour une communication donnée a subi en amont une préemption ("pre-emption" en anglais) d'un émetteur par un émetteur plus prioritaire.

La mesure de la rapidité de synchronisation cryptographique et les limitations de la technique antérieure sont présentées ci-après.

Il existe différents modes de synchronisation cryptographique, dont certains requièrent la transmission explicite de paramètres d'un mot d'état cryptographique afin d'initialiser le processus de déchiffrement. Certains de ces modes, tels que les modes OFB (Output FeedBack mode) et CTR (CounTeR mode), sont par exemple décrits dans la publication américaine du National Institute of Standards and Technology "NIST Special Publication 800-38A 2001 Edition, Recommendation for Block Cipher Modes of Operation - Methods and Techniques". Les paramètres transmis du mot d'état cryptographique définissent un mot de gestion de synchronisation SY (correspondant à " Synchronization Management SM" en anglais).

Dans la technique antérieure, le mot de gestion de synchronisation est typiquement transmis en association avec chaque super-trame d'un flux de données chiffrées.

Deux méthodes d'association connues sont rappelées ci-dessous.

Dans la première méthode d'association, la bande passante $B_{SY}$ nécessaire à la transmission de la trame contenant le mot de gestion de synchronisation est prélevée par vol de trames ("frame stealing" en anglais) dans la bande passante $B_T$ du flux de trames de trafic chiffrées. La bande passante totale nécessaire, exprimée en bit/s, est alors $B = B_T$. La première méthode d'association par vol de trames est décrite dans la norme ETSI EN 302 109 V.1.1., "Terrestrial Trunked Radio (TETRA) ; Security ; Synchronization mechanism for end-to-end encrytion " juin 2003, pages 1-17.

Dans la deuxième méthode d'association, la bande passante $B_{SY}$ nécessaire à la transmission du mot de gestion de synchronisation peut être complémentaire de la bande passante $B_T$ nécessaire à la transmission du flux de trames de trafic chiffrées. Deux canaux logiques sont alors définis : un canal de trafic pour les trames chiffrées et un canal de signalisation associé au canal de trafic pour les trames contenant le mot de gestion de synchronisation. La bande passante totale nécessaire est alors $B = B_{SY} + B_T$. La deuxième méthode est décrite dans la demande de brevet internationale WO 2004/014019.

Soit $S_{SY}$ la taille du mot de synchronisation SY exprimée en bits, déterminée en cohérence avec le choix de l'algorithme de chiffrement, du mode de synchronisation et d'une crypto-période. Cette taille ne dépend pas directement de la structuration en trames, blocs et super-trames du flux.

Selon une première hypothèse, le mot de gestion de synchronisation a une taille $S_{SY}$ inférieure ou égale à la taille d'une trame de trafic.

Le flux effectivement transmis selon la première méthode d'association consiste en une suite de super-trames de dimension 1. Chacune de ces super-trames est formée d'un unique bloc (p = 1) comprenant une trame de synchronisation contenant le mot de gestion de synchronisation de la super-trame et n - 1 trames de données de trafic chiffrées. La première trame de trafic est volée et remplacée par la trame de synchronisation et n'est donc pas transmise.

Le flux effectivement transmis selon la deuxième méthode d'association consiste en une suite de super-trames de dimension 2. Chacune de ces super-trames est formée d'un unique bloc (p = 1) comportant par exemple dans le canal de signalisation une trame de synchronisation contenant le mot de gestion de synchronisation de la super-trame et dans le canal de trafic associé n trames de données de trafic chiffrées.

Selon une deuxième hypothèse, le mot dé gestion de synchronisation de la super-trame a une taille $S_{SY}$ supérieure ou égale à la taille $S_{trame}$ d'une trame. Sans restreindre la généralité de cette hypothèse, le mot de gestion de synchronisation doit être transmis dans des trames identifiables et séparables des trames de trafic du flux de données chiffrées, le cas contraire étant surmonté en segmentant les trames du flux de données chiffrées en autant de trames ad-hoc. Selon un exemple simple, on suppose que $S_{SY} = p \times S_{trame}$ et le mot de gestion de synchronisation résulte de la concaténation de p trames de synchronisation pour une super-trame donnée.

Le flux effectivement transmis selon la première méthode d'association consiste alors en une suite de super-trames. Chacune de ces super-trames est formée de p blocs de dimension 1 comprenant chacun une trame de synchronisation respective suivie de n - 1 trames de trafic, les trames de synchronisation respectivement dans les p blocs de la super-trame concaténées suivant leur ordre d'émission constituant le mot de gestion de synchronisation remplaçant p trames de trafic.

Le flux effectivement transmis selon la deuxième méthode d'association consiste toujours en une suite de super-trames. Chacune de ces super-trames est formée d'un unique bloc (p = 1) de dimension 2 qui comprend dans le canal de signalisation le mot de gestion de synchronisation suivi dans le canal de trafic de n trames de trafic.

Ainsi, selon la technique antérieure, quelles que soient l'hypothèse sur la taille $S_{SY}$ du mot de gestion de synchronisation et la première ou la deuxième méthode d'association, la synchronisation cryptographique est possible approximativement après chaque occurrence d'une super-trame, une fois connu le mot de gestion de synchronisation. Cela conduit approximativement à une période entre synchronisations égale à $T_{sync} = (n \, p \, S_{trame})/B$.

La mesure de la rapidité $T_{sync}$ de synchronisation cryptographique pour un exemple réel met en évidence les limitations de la technique antérieure : avec B = 2400 bit/s, $S_{trame}$ = 54 bits, n = 24, p = 3, on obtient $T_{sync}$ = 1,62 s ; avec B = 2400 bit/s, $S_{trame}$ = 54 bits, n =. 24, p = 4, on obtient $T_{sync}$ = 2,16 s.

Ces valeur s de période entre synchronisations $T_{sync}$ sont satisfaisantes pour une communication point-à-point dans un réseau téléphonique à établissement d'appel lent, de l'ordre de quelques secondes. Elles sont néanmoins incompatibles avec des constantes de temps de synchronisation rapide, typiquement de l'ordre de 0,3 à 1 seconde au maximum, nécessaires dans des réseaux de radiocommunication pour mobiles mettant en oeuvre des fonctions de transfert intercellulaire, d'entrée tardive ou de préemption. Elles sont en outre très supérieures à la durée typique d'un phonème dans un signal de parole qui est chiffré en le flux de données chiffrées. Ces valeurs de période entre synchronisations $T_{syrc}$ sont ainsi incompatibles avec des exigences de communications sécurisées interopérables impliquant simultanément des équipements terminaux d'usager à travers des réseaux hétérogènes. Le besoin de synchronisation rapide peut être illustré par une téléconférence sécurisée multi-usagers impliquant des équipements tels qu'un terminal d'usager d'un réseau filaire RNIS ou IP, un terminal mobile d'un réseau de radiocommunication cellulaire GSM ou UMTS et/ou un terminal mobile d'un réseau de radiocommunication cellulaire professionnel PMR.

On connaît par ailleurs un procédé de synchronisation décrit dans la demande de brevet EP 1209844 qui ajoute des trames de synchronisation supplémentaires dans le flux de données chiffrées. L'adjonction de ces trames de synchronisation supplémentaires modifie la bande passante nécessaire initialement au flux de données chiffrées et ne satisfait pas un besoin de synchronisation rapide de manière optimisée. En outre, ce procédé de synchronisation détruit le synchronisme du flux de données chiffrées et donc la synchronisation lente antérieure ce qui impose que tous les récepteurs traitent les trames de synchronisation supplémentaires et constitue une limitation d'interopérabilité de la sécurité. Par conséquent, ce procédé est inapproprié pour assurer une synchronisation rapide coexistant avec une synchronisation lente préexistante, dont il tire partie.

Un **objectif** de l'invention est de surmonter les inconvénients précédents de la technique antérieure, par une synchronisation d'un équipement avec un flux de données en temps réel qui permet une synchronisation rapide coexistant avec une synchronisation lente, sans accroître la bande passante initiale nécessaire au flux de données.

Pour atteindre cet objectif, un procédé de synchronisation appliqué à un flux de données structuré en des super-trames formées chacune de blocs de trames, chaque bloc dans une super-trame comprenant une partie de synchronisation lente et au moins une trame de trafic, les parties de synchronisation lente dans la super-trame différentes entre elles et résultant au moins d'une décomposition d'un mot de gestion de synchronisation, est caractérisé selon la revendication.

Le mot de gestion de synchronisation est conservé sans changement d'ordre ni décomposition des parties de synchronisation lente. Par exemple le regroupement des parties de synchronisation lente selon un ordre prédéterminé, comme par exemple une concaténation, aide à la reproduction du mot de gestion de synchronisation. Selon l'invention, la conservation des parties de synchronisation lente permet à tout équipement actuel de continuer à fonctionner avec la synchronisation lente, sans aucune modification dans l'équipement actuel. Les parties de synchronisation lente issues du mot de gestion de synchronisation sont introduites dans la super-trame selon l'une ou l'autre des première et deuxième méthodes d'association connues. Les parties de synchronisation supplémentaires sont similaires aux parties de synchronisation lente, c'est-à-dire les parties de synchronisation supplémentaires sont respectivement identiques aux ou quelques peu différentes des parties de synchronisation lente, et sont ajoutées selon l'invention dans une super-trame par remplacement de bits de trame de trafic et donc par vols de certaines trames de trafic entières et/ou par vols de certains bits de trames de trafic.

Les parties de synchronisation supplémentaires donnent la possibilité à un équipement de fonctionner avec une synchronisation plus rapide que la synchronisation lente, lorsque cela s'avère utile, comme par exemple lors d'un transfert (handover) de cellule pour un terminal mobile ou une station de base dans un réseau de radiocommunication cellulaire. La synchronisation rapide coexiste avec la synchronisation lente préexistante sans conduire à de quelconques modifications d'équipements actuels ne fonctionnant qu'avec la synchronisation lente.

L'invention est particulièrement intéressante pour une synchronisation cryptographique d'équipement sur un flux de données chiffrées en temps réel, structuré en des super-trames, dans lequel le chiffrement dépend également du mot de gestion de synchronisation et du découpage initial de chaque super-trame en blocs de taille identique et incluant chacun une partie de synchronisation lente respective et une ou plusieurs trames de trafic.

Soit un nombre entier $k = \text{Ceiling } (p/2)$ pour un nombre $p$ de blocs dans la super-trame. L'opérateur Ceiling est égal à l'argument $p/2$ s'il est entier et est égal à l'entier immédiatement supérieur à l'argument sinon. Par exemple, on a $k = 2$ pour $p = 3$ et $k = 2$ pour $p = 4$. La durée entre deux synchronisations rapides successives selon le procédé de l'invention peut être sensiblement d'au plus $T'_{sync} = (n\ k\ S_{trame})/B.$ et donc inférieure à la période $T_{sync} = (n\ p\ S_{trame})\ /B$ pour la synchronisation lente selon la technique antérieure.

Le procédé de l'invention permet une synchronisation rapide sensiblement en au plus $k = 2$ blocs pour une super-trame formée de 3 blocs ou de 4 blocs, tout en préservant la synchronisation lente dans la super-trame. Dit autrement, le procédé de l'invention permet une synchronisation rapide en moins de $k\ n = 2\ n$ trames, et une synchronisation lente en moins de $3\ n$ trames pour une super-trame formée de $3\ n$ trames ou en moins $4\ n$ trames pour une super-trame formée de $4\ n$ trames, $n$ étant le nombre de trames par bloc.

Selon une réalisation de l'invention, l'une des parties de synchronisation supplémentaires remplace une trame de trafic dans un bloc de la super-trame. En particulier, les parties de synchronisation supplémentaires peuvent remplacer respectivement des trames de trafic dans les blocs de la super-trame, à raison d'une trame de trafic par bloc, les parties de synchronisation lente et les parties de synchronisation supplémentaires étant alors entrelacées. Dans un récepteur recevant le flux de données structuré en des super-trames, lors de la reconstitution du mot de gestion de synchronisation, le nombre de blocs consécutifs observés dans la super-trame peut être encore réduit jusqu'à être inférieur sensiblement à la moitié du nombre de blocs dans la super-trame.

Si les parties de synchronisation lente sont introduites dans la super-trame suivant la première méthode d'association, le nombre de trames de trafic volées dans la super-trame passe de p à 2p, ce qui correspond à un taux d'effacement de trames de trafic du flux de données doublé par rapport à la technique antérieure. Si les parties de synchronisation lente sont introduites dans la super-trame suivant la deuxième méthode d'association, le nombre de trames de trafic volées dans la super-trame passe de 0 à p, ce qui correspond à un taux d'effacement de trames du flux de données égal à 1/n, au lieu de 0 selon la technique antérieure.

Selon d'autres réalisations de l'invention, l'une des parties de synchronisation supplémentaires remplace des bits prédéterminés dans des trames de trafic prédéterminées dans un bloc de la super-trame, c'est-à-dire ces trames de trafic ne sont altérées que partiellement par la partie de synchronisation supplémentaire. Les parties de synchronisation supplémentaires peuvent avoir des sous-parties qui ont une taille en bits inférieure à la taille des trames de trafic et qui sont réparties en remplacement de bits prédéterminés dans toutes les trames de trafic dans la super-trame, ou de certaines trames de trafic ayant des rangs prédéterminés dans un bloc prédéterminé ou des blocs prédéterminés de la super-trame.

Comparativement à la synchronisation lente dépendant du mot de gestion de synchronisation et systématiquement présente dans chaque super-trame du flux de données structuré, un autre avantage du procédé de l'invention est que les parties de synchronisation supplémentaires dont dépend la synchronisation rapide dépendant également des parties de synchronisation lente, peuvent être transmises optionnellement dans chaque super-trame, en fonction des besoins des équipements.

L'invention concerne également une séquence de synchronisation dans une super-trame d'un flux de données structuré en des super-trames formées chacune de blocs de trames numériques, chaque bloc dans une super-trame comprenant une partie de synchronisation lente et au moins une trame de trafic, les parties de synchronisation lente dans la super-trame étant différentes entre elles et résultant au moins d'une décomposition d'un mot de gestion de synchronisation. La séquence de synchronisation est caractérisée selon la revendication 12.

L'invention concerne encore un émetteur conforme à la revendication 15 et un récepteur conforme à la revendication 16 par exemple dans un équipement terminal fixe et/ou mobile ou dans un équipement passerelle entre deux réseaux de télécommunication hétérogènes en matière de synchronisation.

D'autres caractéristiques et avantages de la présente invention apparaîtront plus clairement à la lecture de la description suivante de plusieurs réalisations de l'invention, données à titre d'exemples non limitatifs, en référence aux **dessins** annexés correspondants dans lesquels :

- la figure 1 est un bloc-diagramme schématique d'un émetteur d'un équipement terminal et d'un récepteur RE d'un autre équipement terminal pour la mise en oeuvre du procédé de synchronisation cryptographique de l'invention ;
- la figure 2 est un algorithme d'étapes du procédé de synchronisation cryptographique ;
- les figures 3 et 5 montrent la structure de super-trames dans un flux de données chiffrées avec une synchronisation lente selon la première méthode d'association respectivement pour des premier et deuxième exemples selon la technique antérieure ;
- les figures 4 et 6 montrent la structure de super-trames dans un flux de données chiffrées avec une synchronisation lente respectivement selon les figures 3 et 5 et complétée selon une première réalisation de l'invention ;
- les figures 7 et 9 montrent la structure de super-trames dans un flux de données chiffrées selon la deuxième méthode d'association respectivement pour les premier et deuxième exemples selon la technique antérieure ;
- les figures 8 et 10 montrent la structure de super-trames dans un flux de données chiffrées avec une synchronisation lente respectivement selon les figures 7 et 9 et complétée selon une deuxième réalisation de l'invention ; et
- les figures 11, 12 et 13 montrent la structure de super-trames dans un flux de données chiffrées avec une synchronisation lente selon la première méthode d'association pour le premier exemple et complétée selon d'autres réalisations de l'invention par vols de bit dans certaines trames de trafic, respectivement dans certains blocs.

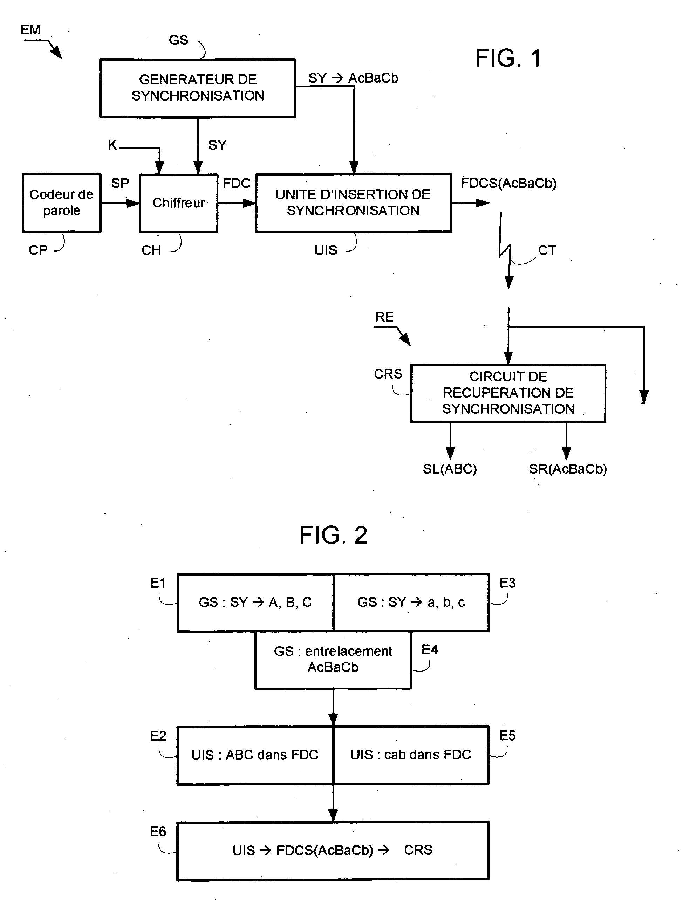

En référence à la figure 1, un équipement mettant en oeuvre le procédé selon l'invention est par exemple un terminal mobile ou une station de base d'un réseau de radiocommunication cellulaire terrestre ou aéronautique ou par satellites, ou encore de type radio terrestre professionnel TETRA, ou bien encore un terminal fixe tel qu'un poste ou une installation téléphonique numérique, un ordinateur ou un réseau local desservi par un réseau numérique de type RNIS ou IP.

Dans un émetteur EM de l'équipement terminal, un flux de données en clair, par exemple un signal de parole numérique SP produit par un codeur de parole CP est chiffré en un flux de données chiffrées numériques FDC dans un chiffreur CH. Le chiffrement du signal de parole est périodique à une fréquence de trame de trafic et fonction de séquences cryptographiques dépendant d'un mot de gestion de synchronisation SY et d'une clé de cryptage secrète K associée à l'équipement terminal.

Le mot de gestion de synchronisation SY est généré et maintenu par un générateur de synchronisation GS qui produit des parties de synchronisation lente et des parties de synchronisation supplémentaires résultant au moins d'une décomposition du mot de gestion de synchronisation SY pour les appliquer en une séquence de synchronisation cryptographique selon l'invention à une fréquence de super-trame à une unité d'insertion de synchronisation UIS. L'unité UIS produit un flux de données chiffrées synchronisées FDCS qui est ensuite modulé pour être transmis via un canal de transmission CT vers le récepteur RE d'un autre équipement terminal. Le flux de données numériques FDCS est structuré en des super-trames ST dont une ou en général plusieurs contiennent chacune une séquence de synchronisation cryptographique qui sert à la fois au synchronisme avec les récepteurs d'équipements terminaux ayant besoin seulement d'une synchronisation lente préexistante SL de manière connue en dépendance du mot de gestion de synchronisation SY et au synchronisme avec les récepteurs d'équipements terminaux ayant besoin notamment d'une synchronisation rapide SR en dépendance des parties de synchronisation lente et des parties de synchronisation supplémentaires. Dans la figure 1, on a supposé que le récepteur RE comprend un circuit de récupération de synchronisation CRS récupérant tantôt la synchronisation lente SL, tantôt la synchronisation rapide SR, bien que des circuits de récupération de synchronisation dans des récepteurs d'autres d'équipements terminaux pouvant communiquer avec l'émetteur EM ne sont conçus que pour récupérer la synchronisation lente SL ou la synchronisation rapide SR.

Dans l'unité UIS, la transmission de parties de synchronisation lente dans le flux de données chiffrées FDC est réalisée de manière connue, "au fil de l'eau", à la période de bloc dans une super-trame,

soit selon la première méthode d'association par vols de trames de trafic et ainsi remplacement périodique de trames de trafic par des parties de synchronisation lente de même taille,

soit selon la deuxième méthode d'association par introduction périodique des parties de synchronisation lente de même taille, dans un canal logique, par exemple un canal de signalisation, associé à autre canal logique, tel qu'un canal de trafic, transportant les trames de trafic du flux de données chiffrées FDC.

L'insertion des parties de synchronisation supplémentaires dans le flux de données chiffrées FDC est selon l'invention réalisée par vols de trames de trafic, ou bien par vols de bits de trames de trafic, c'est-à-dire par remplacement de trames de trafic ou bien de bits trames de trafic par des parties de synchronisation supplémentaires dans chaque super-trame dans le flux de données chiffrées FDC.

On se référera dans la suite de la description à deux exemples de structure de super-trame ST.

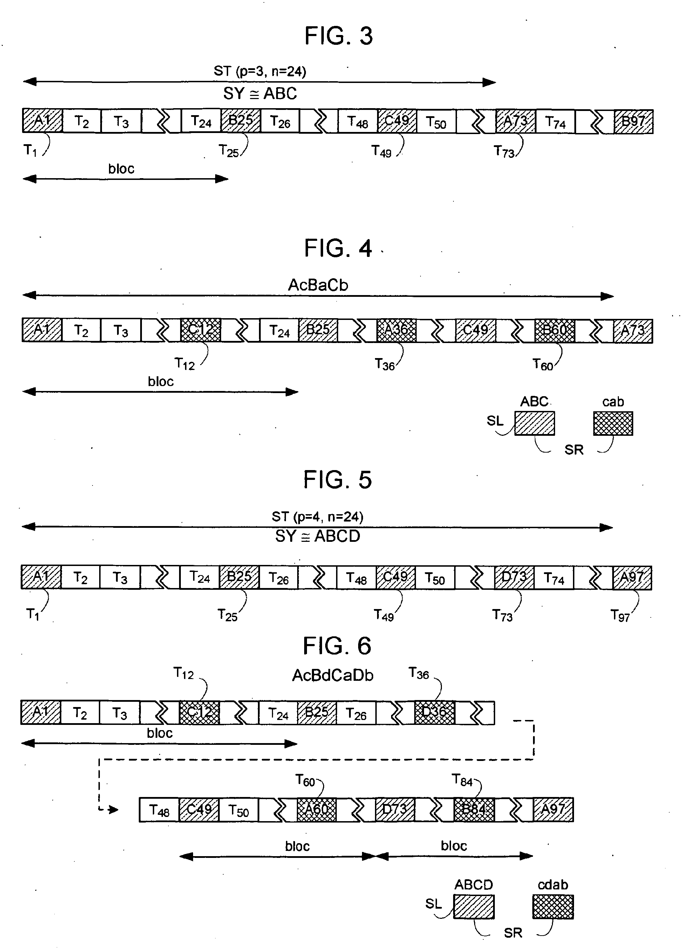

Selon un premier exemple montré aux figures 3, 4, 7, 8, 11, 12 et 13 une super-trame est composée de p = 3 blocs et chaque bloc comprend n = 24 trames numérotées $T_1$ à $T_{24}$ dans le premier bloc et $T_{25}$ à $T_{48}$ dans le deuxième bloc et $T_{49}$ à $T_{72}$ dans le troisième bloc. Le mot de gestion de synchronisation SY a une taille de p $S_{trame}$ = 3 $S_{trame}$, où $S_{trame}$ est la taille d'une trame. p = 3 parties de synchronisation lente A, B et C (rectangles hachurés vers la droite) a priori différentes entre elles et de taille identique à celle d'une trame de trafic résultent en totalité ou au moins principalement d'une décomposition du mot de gestion de synchronisation SY.

Selon un deuxième exemple montré aux figures 5, 6, 9 et 10, une super-trame est composée de p = 4. blocs et chaque bloc comprend n = 24 trames numérotées $T_1$ à $T_{24}$ dans le premier bloc, $T_{25}$ à $T_{48}$ dans le deuxième bloc, $T_{49}$ à $T_{72}$ dans le troisième bloc et $T_{73}$ à $T_{96}$ dans le quatrième bloc. Le mot de gestion de synchronisation SY a une taille de 4 $S_{trame}$. p = 4 parties de synchronisation lente A, B, C et D (rectangles hachurés vers la droite) a priori différentes entre elles et de taille identique à celle d'une trame de trafic résultent en totalité ou au moins principalement d'une décomposition du mot de gestion de synchronisation SY.

Les parties A, B et C ou A, B, C et D fournies par le générateur GS peuvent être simplement des parties consécutives du mot de gestion de synchronisation SY dont la concaténation reconstruit le mot SY, ou bien ces parties consécutives mais selon un ordre différent de celui dans le mot SY. Selon d'autres variantes, chacune des parties A, B et C, ou A, B, C et D est composée de plusieurs suites de bits de tailles identiques ou différentes inférieures à la taille d'une trame, prélevées selon un ordre prédéterminé dans le mot de gestion de synchronisation SY ; par exemple les parties A, B et C sont respectivement composées de bits de poids faibles, de bits de poids forts et faibles et de bits de poids forts du mot SY. Les parties A, B et C ou A, B, C et D peuvent comprendre en faible proportion des éléments, par exemple des éléments de redondance, ou des préfixes ou des suffixes, qui n'appartiennent pas au mot de gestion de synchronisation SY. Les parties A, B et C ou A, B, C et D résultent ainsi au moins d'une décomposition prédéterminée du mot de gestion de synchronisation et sont ainsi déduites d'une fonction prédéterminée appliquée au mot de gestion de synchronisation SY. En d'autres termes, chacune des parties A, B et C ou A, B, C et D peut comprendre, mais non exclusivement, une ou plusieurs portions respectives consécutives ou non consécutives du mot SY, et la réunion de toutes ces portions dans les parties A, B et C ou A, B, C et D est comprise dans le mot SY.

Une **première réalisation** du procédé de synchronisation de l'invention est relative à la première méthode d'association pour ce qui concerne l'insertion des parties de synchronisation lente. Le procédé comprend des étapes E1 à E6 montrées à la figure 2.

En référence au premier exemple de super-trame ST, le générateur de synchronisation GS produit à partir du mot de gestion de synchronisation SY les p = 3 parties de synchronisation lente A, B et C de taille identique et les applique à l'unité UIS pour les insérer dans le flux de données chiffrées FDC selon la première méthode d'association, à l'étape E1. L'unité d'insertion de synchronisation UIS effectue un vol périodique de p = 3, trames dans le flux FDC en remplaçant trois trames de trafic $T_1$, $T_{25}$ et $T_{49}$ respectivement par les parties de synchronisation lente A, B et C à l'étape E2. Les parties A, B et C dans le flux FDCS sont, désignées par A1, B25 et C49 dans la super-trame montrée à la figure 3. Par convention, le début de la super-trame de dimension 1 dans le flux de données chiffrées synchronisées FDCS peut être défini par la première partie A1 dépendant du début du mot SY. Les parties A1, B25 et C49 constituant l'information de synchronisation cryptographique est ainsi transmise dans la bande passante totale nécessaire à la transmission du flux de données chiffrées FDC. Les trames de trafic remplacées $T_1$, $T_{25}$ et $T_{49}$ ne sont pas alors transmises.

L'unité d'insertion de synchronisation UIS peut comprendre des fonctionnalités analogues par exemple à celles du vocodeur paramétrique décrit dans la demande de brevet internationale WO 20054/024786 et servant à insérer un flux d'information secondaire, en tant que flux d'information de synchronisation cryptographique ABC, dans un flux d'information principal, en tant que flux de données chiffrées FDC, ayant un débit plus élevé. Ceci suppose que les trames du flux de données chiffrées FDC sont des trames chiffrées selon un mode OFB ou CTR évoqué ci-dessus ou un mode aux propriétés similaires au mode CTR. Un générateur de masques de trames dans le vocodeur sélectionne, parmi les p x n trames de trafic dans chaque super-trame du flux de données chiffrées FDC, celles $T_1$, $T_{25}$ et $T_{49}$ dans lesquelles seulement les parties de synchronisation lente A1, B25 et C49 sont à insérer.

Les étapes E1 et E2 sont réalisées d'une manière connue.

Selon l'invention, le générateur de synchronisation GS génère et maintient également des parties de synchronisation supplémentaires à la fréquence de super-trame, à l'étape E3 qui peut être simultanée à l'étape E1. Le générateur GS produit à partir du mot de gestion de synchronisation p = 3 parties de synchronisation supplémentaires a, b et c respectivement similaires aux parties de synchronisation lente A, B et C et de taille identique à celle d'une trame de trafic. Le terme "similaires" signifie que les parties de synchronisation supplémentaires a, b et c peuvent être identiques respectivement aux parties de synchronisation lente A, B et C, ou bien peuvent être dans une faible proportion différentes respectivement des parties A, B et C. Dans cette dernière variante, les parties a, b et c comprennent par exemple des préfixes ou suffixes qui sont respectivement différents de ceux des parties A, B et C. Les sensibles différences entre les parties des couples (A, a), (B, b) et (C, c) ne contreviennent pas dans le récepteur à la reconstitution du mot d'origine SY à partir d'une séquence du type AcB, cBa, BaC, aCb, CbA ou bAc, comme on le verra dans la suite de la description.

Finalement à l'étape E4 intermédiaire entre les étapes E1-E3 et E2-E5, le générateur GS entrelace les parties de synchronisation lente A, B et C avec les parties de synchronisation supplémentaires a, b et c pour constituer une séquence de synchronisation cryptographique AcBaCb.

La séquence cab (rectangles à hachures croisées) déduite du mot de gestion de synchronisation SY est appliquée en étant entrelacée avec les parties A, B et C à l'unité UIS pour être également insérée dans le flux de données chiffrées FDC, à l'étape E5. En pratique, les étapes E2 et E5 sont entrelacées en accord avec l'entrelacement des séquences ABC et cab. L'unité d'insertion de synchronisation UIS effectue un vol périodique de p = 3 trames dans le flux FDC en remplaçant trois trames de trafic $T_{12}$, $T_{36}$ et $T_{60}$ respectivement par les parties c, a et b qui sont désignées par C12, A36 et B60 dans la super-trame montrée à la figure 4. La séquence de synchronisation cryptographique AcBaCb est ainsi transmise dans la bande passante totale nécessaire à la transmission du flux de données chiffrées FDC, à l'étape E6. Les trames de trafic remplacées $T_1$, $T_{12}$, $T_{25}$, $T_{36}$, $T_{49}$ et $T_{60}$ ne sont pas transmises.

Dans la super-trame de dimension 1 du flux de données chiffrées synchronisées FDCS, l'entrelacement des parties A, B et C avec les parties c, a et b en la séquence de synchronisation cryptographique AcBaCb est tel qu'une partie de synchronisation supplémentaire c dépendant sensiblement de la fin du mot de gestion de synchronisation SY est insérée dans la super-trame après une autre partie de synchronisation lente A dépendant du début du mot de gestion de synchronisation. En d'autres termes, des bits de poids fort du mot de gestion de synchronisation SY précédent des bits de poids faibles du mot de gestion de synchronisation SY afin que dans le récepteur RE la connaissance d'une partie de synchronisation lente SY et de deux partie s de synchronisation supplémentaires, ou la connaissance de deux parties de synchronisation supplémentaires et d'une partie de synchronisation lente, serve à reconstruire le mot de gestion de synchronisation SY ≅ ABC, ≅ abc en entier. Cette caractéristique est utile au circuit de récupération de synchronisation CRS dans le récepteur RE d'un autre équipement terminal ayant besoin d'une synchronisation rapide SR pour toujours retrouver le mot de gestion de synchronisation dans trois parties consécutives de la séquence de synchronisation cryptographique reçue, soit AcB, cBa, BaC, aCb, CbA et bAc. La détection d'une séquence AcB, cBa, BaC, aCb, CbA, bAc résulte de l'observation d'au plus 2 blocs consécutifs de la super-trame ST. Ces blocs consécutifs de la super-trame sont donc en nombre strictement inférieur au nombre 3 de blocs dans la super-trame et contribuent à reconstituer les mêmes informations que la séquence ABC dans le récepteur RE.

L'ordre d'insertion des parties de synchronisation supplémentaires c, a et b maximise la rapidité de reconstitution du mot de gestion de synchronisation SY. Dans le récepteur, la reconnaissance des parties c, a et b peut être similaire mais distincte de la reconnaissance des parties de la séquence ABC : par exemple, l'usage de différents préfixes pseudo-aléatoires déterminés en début des parties A, B, C, a, b et c convient ; l'usage de préfixes non tous identiques convient aussi.

Bien que chaque partie de synchronisation supplémentaire c, a ou b puisse remplacer n'importe quelle trame de trafic comprise dans le premier, deuxième ou troisième bloc dans la super-trame, il est préférable que les trames de trafic $T_{12}$, $T_{36}$ et $T_{60}$ remplacées par les parties de synchronisation supplémentaire c, a et b soient temporellement situées sensiblement au milieu respectivement des blocs de la super-trame, comme cela apparaît à la figure 4. Ces positions temporelles des parties c, a et b sensiblement centrales aux blocs minimise en moyenne la période de récupération de la synchronisation rapide. En effet, dans le plus mauvais des cas, lorsque la synchronisation rapide est déclenchée dans le récepteur RE juste après la détection de l'une quelconque des trames de synchronisation A1, C12, B25, A36, C49 et B60 qui assurent en combinaison la synchronisation lente préexistante selon la technique antérieure et la synchronisation rapide selon l'invention, le circuit de récupération de synchronisation CRS dans le récepteur observe au plus la moitié de la super-trame ST, c'est-à-dire au plus les trames dans pendant 1,5 période de bloc selon ce premier exemple de super-trame, pour récupérer l'une des séquences AcB, cBa, BaC, aCb, CbA, bAc et reconstituer les mêmes informations que le mot de gestion de synchronisation SY $\cong$ ABC.

A titre d'illustration, pour un débit B = 2400 bit/s des flux FDC et FDCS et des paramètres $S_{trame}$ = 54 bits, n = 24, p = 3 et donc k = 2, la période de synchronisation rapide est $T'_{sync}$ = (n 1,5 $S_{trame}$)/B = 0,81 s pour un positionnement temporelle des parties de synchronisation supplémentaires c, a et b sensiblement central aux blocs de la super-trame, comme montré à la figure 6. Au pire, si deux parties de synchronisation supplémentaires, par exemple c et a, sont insérées à des extrémités opposées dans des blocs consécutifs de la super-trame, en remplacement de la trame de trafic $T_1$ succédant à la trame de synchronisation lente A1 et en remplacement de la trame de trafic $T_{48}$ précédant la trame de synchronisation lente C49, la période de synchronisation rapide est au plus étalée sur deux blocs environ, soit moins de 2n trames, soit $T'_{sync}$ < (2 n $S_{trame}$)/B = 1,08 s. Dans tous les cas, la période de synchronisation rapide est nettement inférieure à la période de synchronisation lente du mot de gestion de synchronisation SY $\cong$ ABC étalée sur au plus 3n trames, soit $T_{sync}$ = (3 n $S_{trame}$)/B = 1,62 s.

On se réfère maintenant au deuxième exemple de super-trame ST pour la première réalisation du procédé de synchronisation de l'invention.

Le générateur de synchronisation GS produit à partir du mot de gestion de synchronisation SY à la fréquence de super-trame, p = 4 parties de synchronisation lente A, B, C et D et p = 4 partiels de synchronisation supplémentaires a, b, c et d de taille identique, aux étapes E1 et E3. Les parties de synchronisation supplémentaires a, b, c et d sont respectivement similaires aux parties de synchronisation lente A, B, C et D. A l'étape E4, le générateur GS entrelace les parties de synchronisation lente A, B, C et D avec les parties de synchronisation supplémentaires a, b, c et d pour constituer une séquence de synchronisation cryptographique AcBdCaDb.

La séquence AcBdCaDb résultant d'un entrelacement d'ordre 2 des parties de synchronisation lente et des parties de synchronisation supplémentaires est appliquée à l'unité UIS qui l'insère dans le flux de données chiffrées FDC selon la première méthode d'association, aux étapes E2 et E5. L'unité d'insertion de synchronisation UIS effectue un vol périodique de 2p = 8 trames dans le flux FDC en remplaçant quatre trames de trafic $T_1$, $T_{25}$, $T_{49}$ et $T_{73}$ respectivement par les parties de synchronisation lente A, B, C et D qui sont désignées par $A_1$, B25, C49 et D73 dans la super-trame montrée à la figure 6, et en remplaçant quatre trames de trafic $T_{12}$, $T_{36}$, $T_{60}$ et $T_{84}$ respectivement par les parties de synchronisation supplémentaires c, d, a et b qui sont désignées par C12, D36, A60 et B84 (rectangles à hachures croisées) dans la super-trame montrée à la figure 6.

Comparativement à la super-trame montrée à la figure 5 ne comprenant que le mot de gestion de synchronisation SY = ABCD et relative à la synchronisation lente SL selon la technique antérieure, l'invention ajoute les p = 4 parties de synchronisation supplémentaires c, d, a et b. La séquence de synchronisation cryptographique AcBdCaDb est ainsi transmise dans la bande passante totale nécessaire à la transmission du flux de données chiffrées FDC, à l'étape E6. Les trames de trafic remplacées $T_1$, $T_{12}$, $T_{25}$, $T_{36}$, $T_{49}$, $T_{60}$, $T_{73}$ et $T_{84}$ ne sont pas transmises.

La séquence de synchronisation cryptographique AcBdCaDb présente des caractéristiques analogues à la séquence AcBaCb. Le circuit de récupération de synchronisation CRS dans le récepteur RE d'un autre équipement terminal ayant besoin d'une synchronisation rapide SR retrouve toujours le mot de gestion de synchronisation SY $\cong$ ABCD dans au plus cinq parties consécutives de la séquence de synchronisation cryptographique reçue, soit AcBd, cBdCa, BdCa, dCaDb, CaDb, aDbAc, DbAc, bAcBd, tout en préservant la séquence de synchronisation lente ABCD. La détection d'une séquence AcBd, cBdCa, BdCa, dCaDb, CaDb, aDbAc, DbAc, bAcBd permet de reconstituer les mêmes informations de synchronisation que la séquence ABCD dans le récepteur RE.

Les positions temporelles des parties de synchronisation supplémentaires c, d, a et b sont de préférence sensiblement centrales aux blocs afin de maximiser la rapidité de reconstitution du mot de synchronisation ABCD $\cong$ SY et minimiser en moyenne la période de récupération de la synchronisation rapide dans le circuit de récupération de synchronisation CRS du récepteur.

En reprenant les mêmes valeurs de débit et de paramètres mais avec p = 4, la période de synchronisation rapide $T'_{sync}$ est au plus étalée sur deux blocs, soit moins de 2n trames :

$$T'_{sync} \leq (n\ k\ S_{trame})/B = (24 \times 2 \times 54)/2400 = 1{,}08\ s.$$

La période de synchronisation rapide est encore inférieure à la période de synchronisation lente du mot de gestion de synchronisation $SY \cong ABCD$ étalée sur 4n trames, soit $T_{sync} = (n\ 4\ S_{trame})/B = 2{,}16\ s$.

D'autres séquences de synchronisation cryptographique présentent des caractéristiques analogues aux séquences précédentes AcBaCb et AcBdCaDb. Ainsi dans l'ordre d, a, b et c, les parties de synchronisation supplémentaires sont entrelacées avec les parties de synchronisation lente A, B, C et D pour former la séquence de synchronisation rapide AdBaCbDc dans le flux de données chiffrées, tout en préservant la séquence de synchronisation lente préexistante ABCD.

Plus généralement, le nombre de parties de synchronisation lente et le nombre de parties de synchronisation supplémentaires peuvent être supérieurs à quatre, quel que soit le nombre n de trames par bloc.

Une **deuxième réalisation** du procédé de synchronisation de l'invention est relative à la deuxième méthode d'association pour ce qui concerne l'insertion des parties de synchronisation lente. Le procédé comprend des étapes analogues aux étapes E1 à E6 montrées à la figure 2 et est décrit ci-après également en référence aux premier et deuxième exemples de structure de super-trame ST.

Selon la technique antérieure, le générateur de synchronisation GS produit à partir du mot de gestion de synchronisation SY les p = 3 parties de synchronisation lente A, B et C selon le premier exemple, ou en les p = 4 parties de synchronisation lente A, B, C et D selon le deuxième exemple, à l'étape E1. Ces parties de synchronisation lente sont de tailles identiques et appliquées à l'unité d'insertion de synchronisation UIS. Au lieu de dégrader sensiblement la phonie par l'insertion des parties de synchronisation leste dans le canal de trafic selon la première méthode d'association et donc par occupation de ressources utiles à la communication, l'unité UIS insère les parties de synchronisation lente A, B et C, ou A, B, C et D, dans un autre canal logique associé au canal de trafic transportant le flux données chiffrées FDC, selon la deuxième méthode d'association.

Par exemple selon la demande de brevet internationale WO 2004/014019, le canal de trafic est composé d'intervalles de temps d'un premier type multiplexés à division du temps TDMA ("Time Division Multiple Access" en anglais) occupés par les trames de trafic, comme dans la première réalisation, et l'autre canal logique est un canal de signalisation formé au moins d'un d'intervalle de temps d'un deuxième type occupé par les parties de synchronisation lente. Une information de retard représentative de l'écart temporel entre un intervalle de temps du deuxième type et une trame de trafic qui est transmise lorsqu'une partie de synchronisation lente est transmise, est également introduite dans le canal de signalisation. Les parties de synchronisation lente peuvent être transmises dans le canal de signalisation lorsque des ressources de celui-ci sont disponibles.

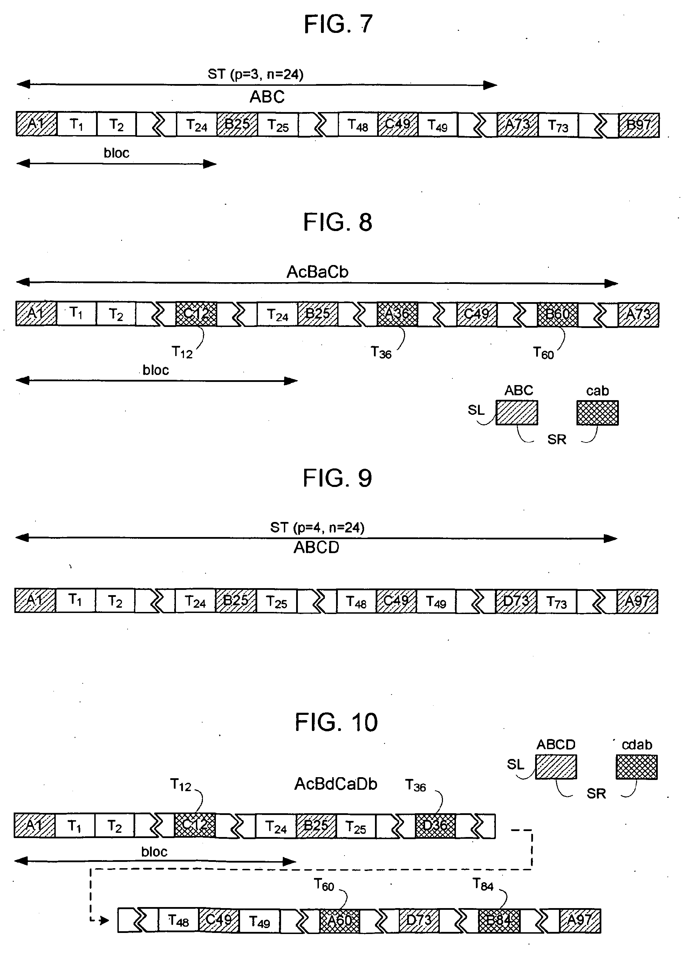

Par exemple, lorsque l'émetteur EM est dans un équipement terminal tel qu'un mobile d'un réseau cellulaire, le canal de trafic est un canal logique de trafic montant ou descendant TCH (pour "Traffic CHannel" en anglais) établi sur une fréquence prédéterminée et multiplexé temporellement avec d'autres canaux logiques : des canaux de trafic attribués à d'autres mobiles et au moins un canal de signalisation. Le canal de signalisation est un canal de contrôle lent de type SACCH ("Slow Associated Control CHannel" en anglais) qui transporte les parties du mot de gestion de synchronisation A, B et C, ou A, B, C et D, et ainsi assure une synchronisation lente du canal de trafic associé, sans altérer le canal de trafic par des vols de trame. Ainsi dans les figures 7 et 9, on suppose par convention que le début de la super-trame de dimension 2, correspondant à un multiplexage de canaux d'ordre 2, dans le flux de données chiffrées synchronisées FDCS et donc le début du premier bloc sont définis par la première partie de synchronisation lente A dépendant du début du mot SY et occupant un intervalle de temps A1 du canal de signalisation précédant la première trame de trafic $T_1$. Au début des blocs suivants à n = 24 trames de trafic, la deuxième partie B occupe un intervalle de temps B25 du canal de signalisation précédant la première trame de trafic $T_{25}$ du deuxième bloc de la super-trame et la troisième partie C occupe un intervalle de temps C49 du canal de signalisation précédant la première trame de trafic $T_{49}$ du troisième bloc de la super-trame, et pour la super-trame selon le deuxième exemple (figure 9), la quatrième partie D occupe un intervalle de temps D73 du canal de signalisation précédant la première trame de trafic $T_{73}$ du quatrième bloc de la super-trame.

Les parties A1, B25 et C49, ou A1, B25, C49 et D73, représentative de l'information de synchronisation cryptographique est ainsi transmise hors de la bande passante nécessaire à la transmission du flux de données chiffrées FDC qui n'est pas altéré.

Pour associer les parties de synchronisation lente hors de la bande du flux de données chiffrées, l'unité d'insertion de synchronisation UIS peut comprendre des fonctionnalités analogues par exemple à celles de la partie de réception de terminal mobile selon la demande de brevet internationale WO 2004/014019, et notamment du circuit de traitement de signal à émettre dans cette partie de réception.

Selon l'invention, le générateur de synchronisation GS génère également à partir du mot de gestion de synchronisation SY à la fréquence de super-trame, à l'étape E3, et maintient p = 3 parties de synchronisation supplémentaires a, b et c respectivement similaires aux parties de synchronisation lente A, B et C, ou p = 4 parties de synchronisation supplémentaires a, b, c et d respectivement similaires aux parties de synchronisation lente A, B, C et D, et de taille identique à celle d'une trame de trafic. A l'étape E4 intermédiaire entre les étapes E1-E3 et E4-E5, le générateur GS entrelace les parties de synchronisation lente A, B et C, ou A, B, C et D, avec les parties de synchronisation supplémentaires a, b et c, ou a, b, c et d (rectangles là hachures croisées), pour constituer une séquence de synchronisation cryptographique AcBaCb selon la figure 8, ou AcBdCaDb selon la figure 10.

La séquence cab, ou cdab, déduite du mot de gestion de synchronisation SY et entrelacée avec les parties A, B et C, ou A, B, C et D, est appliquée à l'unité UIS pour l'insérer dans le flux de données chiffrées FDC par vol périodique de trame de trafic à l'étape E5, comme dans la première réalisation. Pour insérer les parties de synchronisation supplémentaires a, b et c, ou a, b, c. et d dans la bande du flux de données chiffrées, l'unité d'insertion de synchronisation UIS. peut comprendre des fonctionnalités analogues par exemple à celles du vocodeur paramétrique incluant un générateur de masques de trames de trafic et décrit dans la demande de brevet internationale WO 2004/024786.

Ainsi ce qui a été décrit pour la première réalisation en ce qui concerne les parties de synchronisation supplémentaires a, b et c, ou a, b, c et d est valable pour la deuxième réalisation. Comme cela apparaît à la figure 8 en accord avec la figure 4 selon le premier exemple, les trois trames de trafic $T_{12}$, $T_{36}$ et $T_{60}$ sont remplacées respectivement par les parties c, a et b désignées par C12, A36 et B60 ; ces parties sont temporellement situées sensiblement au milieu respectivement des blocs de la super-trame et sont entrelacées avec les parties A1, B25 et C49, les parties A1, B25 et C49 étant réparties en hors bande dans la super-trame comme également montré à la figure 7 de la technique antérieure ; le circuit de récupération de synchronisation CRS dans le récepteur RE recevant le canal de trafic et le canal de signalisation détecte des séquences de synchronisation rapide AcB, cBa, BaC, aCb, CbA, bAc qui chacune lui permettent de reconstituer les mêmes informations que la séquence ABC. Selon le deuxième exemple montré à la figure 10 en accord avec la figure 6, les quatre trames de trafic $T_{12}$, $T_{36}$, $T_{60}$ et $T_{84}$ sont remplacées respectivement par les parties c, d, a et b désignées par C12, D36, A60 et B84 ; ces parties sont temporellement situées sensiblement au milieu respectivement des blocs de la super-trame et sont entrelacées avec les parties A1, B25, C49 et D73, les parties A1, B25, C49 et D73 étant réparties en hors bande dans la super-trame comme également montré à la figure 9 de la technique antérieure ; le circuit de récupération de synchronisation CRS détecte des séquences de synchronisation rapide AcBd, cBdCa, BdCa, dCaDb, CaDb, aDbAc, DbAc, bAcBd, qui chacune lui permettent de reconstituer les mêmes informations que la séquence ABCD.

La synchronisation rapide est possible en au moins 25 trames selon la figure 8, comme selon la figure 4, et au pire en au plus 47 trames si deux parties de synchronisation supplémentaires, par exemple c et a, sont insérées à des extrémités opposées dans des blocs consécutifs de la super-trame. D'une manière similaire, la synchronisation rapide est possible en au moins 36 trames selon la figure 10, comme selon la figure 6, et. au pire en au plus 72 trames.

La séquence de synchronisation cryptographique AcBaCb ou AcBdCaDb assure encore la coexistence de la synchronisation lente préexistante SL et de la synchronisation rapide SR.

L'invention n'est pas limitée aux deux réalisations décrites ci-dessus, mais embrassent bien **d'autres réalisations** dont quelques unes sont présentées ci-dessous. Le nombre de parties composant une séquence de synchronisation cryptographique peut êtres supérieur à huit.

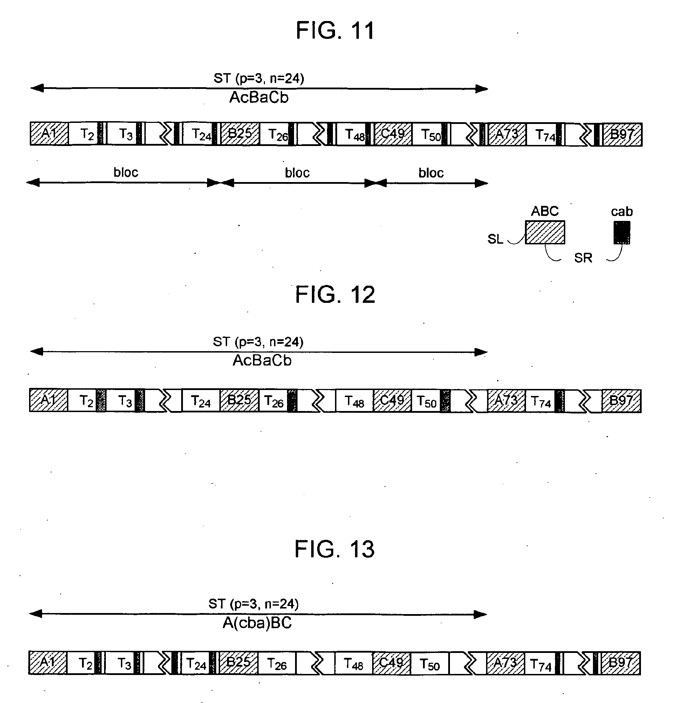

On se réfère maintenant aux figures 11, 12 et 13 qui sont relatives à la première méthode d'association en ce qui concerne les parties de synchronisation lente ( rectangles hachurés vers la droite). Cependant tout ce qui est précisé ci-après concernant la répartition de parties de synchronisation lente dans le flux de données chiffrées FDC par vols de bits de trafic est également valable pour d'autres exemples et pour la deuxième méthode d'association.

Dans les figures 11, 12 et 13, la synchronisation lente préexistante dépend de p = 3 parties A, B et C déduites du mot de gestion de synchronisation SY selon le premier exemple. Le générateur de synchronisation GS génère les parties de synchronisation supplémentaires a, b et c qui sont respectivement similaires aux parties de synchronisation lente A, B et C. Cependant les parties de synchronisation supplémentaires a, b et c sont elles-mêmes divisées en des sous-parties (rectangles à hachures croisées) dont la taille est inférieure à la taille $S_{trame}$ des trames de trafic afin que la synchronisation rapide ne soit mise en oeuvre que de façon intermittente, par exemple dans certaines trames de trafic, ou dans certains blocs de trames seulement dans toutes ou seulement certaines super-trames. En fonction notamment de caractéristiques du flux de données chiffrées à préserver au cours de la transmission entre l'émetteur EM et le récepteur RE, la synchronisation rapide peut être minimisée en nombre de trames affectées par des vols de bit pour insérer les parties de synchronisation supplémentaires.

Selon la figure 11, les parties de synchronisation supplémentaires c, a et b présentent ensemble autant de sous-parties que de trames de trafic dans une super-trame ST, soit p(n-1) sous-parties. L'unité d'insertion de synchronisation UIS insère dans chaque trames de trafic une sous-partie de synchronisation supplémentaire en remplacement de bits ayant des rangs prédéterminés dans la trame de trafic. Ainsi les sous-parties remplaçant des bits de trafic dans les trames de trafic des premier, deuxième et troisième blocs sont issues de fragmentations respectivement des parties de synchronisation supplémentaires c, a et b de manière à insérer la séquence de synchronisation cryptographique AcBaCb dans le flux de données chiffrées FDC. L'insertion des parties c, a et b selon la figure 11 préserve partiellement toutes les trames de trafic, et la synchronisation rapide est possible en au moins 25 trames et au plus 47 trames.

La réalisation selon la figure 12 diffère de celle de la figure 11 par le nombre sous-parties des parties de synchronisation supplémentaires qui est inférieur au nombre $p(n-1)$ de trames de trafic dans une super-trame ST. Les parties c, a et b sont respectivement réparties en remplacement de bits ayant des rangs prédéterminés dans des trames de trafic qui ont elles-mêmes des rangs prédéterminés dans les blocs de la super-trame. Selon l'exemple à la figure 11, des bits à la fin des trois premières trames de trafic succédant à une partie de synchronisation lente A1, B25, C49 dans les trois blocs sont remplacés par des sous-parties des parties de synchronisation supplémentaires respectives c, a et b et les autres trames de trafic sont maintenues sans aucun vol de bit.

En référence à la figure 13 et comparativement à la figure 11 ou 12, au lieu de répartir les parties de synchronisation supplémentaires c, a et b dans toutes ou certaines trames de trafic de tous les blocs d'une super-trame ST, l'unité d'insertion de synchronisation UIS insère des sous-parties des parties de synchronisation supplémentaires en remplacement de bits ayant des rangs prédéterminés dans toutes ou certaines trames de trafic d'un seul bloc d'une super-trame ST, par exemple le premier bloc de celle-ci.

Pour les réalisations selon les figures 11, 12 et 13, lorsque le modèle de source du flux de données à chiffrer prévoit différentes classes de bits en fonction de leur sensibilité par rapport à la qualité du codage du signal de parole dont est issu le flux de données chiffrées FDC, les bits ou certains bits des parties de synchronisation supplémentaires remplacent des bits les moins sensibles de trames de trafic. Les bits les moins sensibles dans les tramés de trafic peuvent être choisis parmi ceux qui contribuent le moins à la qualité objective ou subjective du signal de parole déchiffré par le codec utilisé dans le récepteur et qui appartiennent à une classe de bits de protection prédéterminée pour le codage canal entre l'émetteur et le récepteur.

A titre d'illustration, pour un débit B = 2400 bit/s des flux FDC et FDCS et des paramètres $S_{trame}$ = 54 bits, n = 24 et p = 3, la période de synchronisation rapide est au mieux $T'_{sync}$ = (n 1 $S_{trame}$)/B = 0,54 s pour 3x54 bits volés dans le premier bloc pour insérer les parties de synchronisation supplémentaires selon la figure 13, et au pire $T'_{sync}$ = (n 2 $S_{trame}$)/B = 1.08 s pour n = 54 bits volés par bloc pour insérer les parties de synchronisation supplémentaires selon la figure 11 ou 12.

Quelle que soit la réalisation, la séquence de synchronisation cryptographique entrelaçant les parties de synchronisation lente et les parties de synchronisation supplémentaires assure à la fois la synchronisation lente SL et la synchronisation rapide SR.

Le procédé selon l'invention trouve des applications notamment dans le domaine des télécommunications sécurisées. Il est adapté à la synchronisation cryptographique entre des équipements terminaux, fixes et/ou mobiles, opérant dans des réseaux hétérogènes interconnectés dont les constantes temporelles de synchronisation diffèrent.

Une application typique concerne la synchronisation cryptographique de flux de données chiffrées en temps réel entre un terminal fixe et un terminal mobile. Le terminal fixe n'est compatible qu'avec une synchronisation cryptographique lente. Le terminal mobile nécessite en outre une synchronisation cryptographique rapide, par exemple à l'occasion d'un transfert intercellulaire ("handover" en anglais), afin de ne pas interrompre une conversation établie entre les deux terminaux.

Dans une communication de phonie chiffrée, si la source du trafic chiffré est un vocodeur mettant en oeuvre des trames de silence, l'émetteur du flux de données de trafic chiffrées peut imposer que la synchronisation rapide soit insérée au moins dans des super-trames ou des blocs correspondant à des fenêtres temporelles de silence.

Dans une communication chiffrée impliquant plusieurs réseaux de télécommunication hétérogènes interconnectés, le procédé de l'invention est avantageusement mis en oeuvre dans tous les réseau x nécessitant une synchronisation rapide, tout en préservant la synchronisation lente nécessaire dans les autres réseaux interconnectés. Pour cela, le procédé de l'invention est mis en oeuvre dans tout terminal connecté à un réseau interconnecté nécessitant une synchronisation rapide, comme par exemple un terminal radio mobile dans un réseau de radiocommunication cellulaire. Le procédé est également mis en oeuvre dans des équipements de télécommunication réalisant une passerelle d'interfonctionnement entre des réseaux hétérogène, par exemple une passerelle entre un réseau de radiocommunication cellulaire et un réseau de télécommunication fixe tel qu'un réseau de télécommunication commuté ou un réseau de paquets de type internet ou intranet. Ainsi, le flux de données chiffrées provenant d'un terminal à synchronisation lente, par exemple un terminal d'un réseau fixe de type RNIS, peut être augmenté de vols de trame supplémentaires assurant la synchronisation rapide, à l'intention de terminaux nécessitant à la fois la synchronisation lente et la synchronisation rapide, comme par exemple un terminal mobile d'un réseau de radiocommunication cellulaire. Dans le sens inverse, le flux contenant les trames de synchronisation lente et les trames de synchronisation rapide émis par un terminal rapide est traité à la fois par le récepteur d'un terminal à synchronisation rapide qui reconnaît la synchronisation rapide et la synchronisation lente, et par le récepteur d'un terminal à synchronisation lente qui reconnaît la synchronisation lente et traite les trames de synchronisation rapide comme des trames de trafic qui ont subit une interférence.

**Revendications**

1. Procédé de synchronisation appliqué à un flux de données (FDCS) structuré en des super-trames (ST) formées chacune de blocs de trames, chaque bloc dans une super-trame (ST) comprenant une partie de synchronisation lente (A, B, C) et au moins une trame de trafic ($T_2$ à $T_{24}$ ou $T_1$ à $T_{24}$), les parties de synchronisation lente (A, B, C) dans la super-trame (ST) étant différentes entre elles et résultant au moins d'une décomposition d'un mot de gestion de synchronisation (SY), **caractérisé** dans la super-trame (ST) par un remplacement (E5) de bits de trames de trafic ($T_{12}$, $T_{36}$, $T_{60}$) dans la super-trame (ST) par des parties de synchronisation supplémentaires (a, b, c) dont chacune est au plus dans une faible proportion différente d'une partie de synchronisation lente (A, B, C) respective de sorte à permettre, lors d'une réception de la super-trame (ST), une reconstitution du mot de gestion de synchronisation (SY) par observation de blocs consécutifs dans la super-trame (ST) en nombre strictement inférieur au nombre de blocs dans la super-trame (ST).

2. Procédé conforme à la revendication 1, selon lequel au moins une partie de synchronisation supplémentaire (c; d) dépendant sensiblement de la fin du mot de gestion de synchronisation est insérée dans la super-trame (ST) après une autre partie de synchronisation lente (A) dépendant du début du mot de gestion de synchronisation.

3. Procédé conforme à la revendication 1 ou 2, selon lequel l'une desdites parties de synchronisation supplémentaires (a, b, c) remplace une trame de trafic ($T_{12}$, $T_{36}$, $T_{60}$) dans un bloc de la super-trame (ST).

4. Procédé conforme à la revendication 1 ou 2, selon lequel les parties de synchronisation supplémentaires (a, b, c) remplacent respectivement des trames de trafic ($T_{12}$, $T_{36}$, $T_{60}$) dans les blocs de la super-trame (ST), à raison d'une trame de trafic par bloc.

5. Procédé conforme à la revendication 4, selon lequel les trames de trafic ($T_{12}$, $T_{36}$, $T_{60}$) remplacées par les parties de synchronisation supplémentaires (a, b, c) sont temporellement situées sensiblement au milieu des blocs de la super-trame (ST).

6. Procédé conforme à la revendication 1 ou 2, selon lequel l'une des parties de synchronisation supplémentaires remplace des bits prédéterminés dans des trames de trafic prédéterminées dans un bloc de la super-trame (ST).

7. Procédé conforme à la revendication 1 ou 2, selon lequel les parties de synchronisation supplémentaires ont des sous-parties qui ont une taille inférieure à la taille des trames de trafic et qui sont réparties en remplacement de bits prédéterminés dans des trames de trafic dans la super-trame (ST).

8. Procédé conforme à la revendication 1, 2 ou 7, selon lequel les parties de synchronisation supplémentaires ont des sous-parties qui ont une taille inférieure à la taille des trames de trafic et qui sont réparties en remplacement de bits dans des trames de trafic ayant des rangs prédéterminés dans des blocs prédéterminés de la super-trame (ST).

9. Procédé conforme à la revendication 1, 2 ou 7, selon lequel des parties de synchronisation supplémentaires ont des sous-parties qui ont une taille inférieure à la taille des trames de trafic et qui sont réparties en remplacement de bits de trames de trafic incluses dans un bloc de la super-trame (ST).

10. Procédé conforme à l'une quelconque des revendications 6 à 9, **caractérisé en ce que** des bits de trames de trafic dans la super-trame (ST) remplacés par les parties de synchronisation supplémentaires sont des bits les moins sensibles de trames de trafic.

11. Procédé conforme à l'une quelconque des revendications 1 à 10, selon lequel le nombre de blocs consécutifs observés dans la super-trame (ST) lors de la reconstitution du mot de gestion de synchronisation (SY) est inférieur sensiblement à la moitié du nombre de blocs dans la super-trame (ST).

12. Super-trame (ST) comprenant une séquence de synchronisation et formée de blocs de trames numériques, chaque bloc dans la super-trame (ST) comprenant une partie de synchronisation lente (A, B, C) et au moins une trame de trafic ($T_2$ à $T_{24}$ ou $T_1$ à $T_{24}$), les parties de synchronisation lente dans la super-trame (ST) étant différentes entre elles et résultant au moins d'une décomposition d'un mot de gestion de synchronisation (SY), **caractérisée en ce qu'**elle comprend des parties de synchronisation supplémentaires (a, b, c) dont chacune est au plus dans une faible proportion différente d'une partie de synchronisation lente (A, B, C) respective et qui sont réparties en remplacement de bits de trames de trafic ($T_{12}$, $T_{36}$, $T_{60}$) dans la super-trame (ST), de sorte à permettre, lors d'une réception de la super-trame (ST), une reconstitution du mot de gestion de synchronisation (SY) par observation de blocs consécutifs dans la super-trame (ST) en nombre strictement inférieur au nombre de blocs dans la super-trame (ST).

**13.** Super-trame (ST) conforme à la revendication 12, du type AcBaCb dans laquelle a, b et c désignent des parties de synchronisation supplémentaires respectivement dans de faibles proportions différentes de parties de synchronisation lente A, B et C et entrelacées avec ces dernières dans la super-trame (ST).

**14.** Super-trame (ST) conforme à la revendication 12, du type AcBdCaDb ou AdBaCbDc dans laquelle a, b, c et d désignent des parties de synchronisation supplémentaires respectivement dans de faibles proportions différentes de parties de synchronisation lente A, B, C et D et entrelacées avec ces dernières dans la super-trame (ST).

**15.** Emetteur (EM) apte à émettre un flux de données (FDCS) structuré en des super-trames (ST) formées chacune de blocs de trames, chaque bloc dans une super-trame (ST) comprenant une partie de synchronisation lente (A, B, C) et au moins une trame de trafic ($T_2$ à $T_{24}$ ou $T_1$ à $T_{24}$), les parties de synchronisation lente (A, B, C) dans la super-trame (ST) étant différentes entre elles et résultant au moins d'une décomposition d'un mot de gestion de synchronisation (SY), **caractérisé en ce qu'**il comprend un moyen (GS, UIS) pour remplacer des bits de trames de trafic ($T_{12}$, $T_{36}$, $T_{60}$) dans la super-trame (ST) par des parties de synchronisation supplémentaires (a, b, c) dont chacune est au plus dans une faible proportion différente d'une partie de synchronisation lente (A, B, C) respective de sorte à permettre, par un récepteur (RE) de la super-trame (ST), une reconstitution du mot de gestion de synchronisation (SY) par observation de blocs consécutifs dans la super-trame (ST) en nombre strictement inférieur au nombre de blocs dans la super-trame (ST).

**16.** Récepteur (RE) apte à recevoir un flux de données (FDCS) structuré en des super-trames (ST) formées chacune de blocs de trames, chaque bloc dans une super-trame (ST) comprenant une partie de synchronisation lente (A, B, C) et au moins une trame de trafic ($T_2$ à $T_{24}$ ou $T_1$ à $T_{24}$), les parties de synchronisation lente (A, B, C) dans la super-trame (ST) étant différentes entre elles et résultant au moins d'une décomposition d'un mot de gestion de synchronisation (SY), **caractérisé en ce qu'**il comprend un moyen (CRS) pour reconstituer le mot de gestion de synchronisation (SY) par observation de blocs consécutifs dans la super-trame (ST) en nombre strictement inférieur au nombre de blocs dans la super-trame (ST) dans laquelle des parties de synchronisation supplémentaires (a, b, c) dont chacune est au plus dans une faible proportion différente d'une partie de synchronisation lente (A, B, C) respective remplacent des bits de trames de trafic ($T_{12}$, $T_{36}$, $T_{60}$) dans la super-trame (ST).

**Claims**

**1.** A synchronization method applied to a data stream (FDCS) structured into super-frames (ST) each formed of blocks of frames, each block in a super-frame (ST) comprising a slow synchronization part (A, B, C) and at least one traffic frame ($T_2$ to $T_{24}$ or $T_1$ to $T_{24}$), the slow synchronization parts (A, B, C) in the super-frame (ST) being different from each other and resulting at least from a decomposition of a synchronization management word (SY), **characterized in** the super-frame (ST) by a replacement (E5) of bits of traffic frames ($T_{12}$, $T_{36}$, $T_{60}$) in the super-frame (ST) by additional synchronization parts (a, b, c), each of which is at most in a low proportion different from a respective slow synchronization part (A, B, C), thereby to enable, upon receipt of the super-frame (ST), a reconstitution of the synchronization management word (SY) by observing consecutive blocks in the super-frame (ST) in number strictly less than the number of blocks in the super-frame (ST).

**2.** A method according to claim 1, wherein at least one additional synchronization part (c; d) substantially dependent on the end of the synchronization management word is inserted into the super-frame (ST) after another slow synchronization part (A) dependent on the start of the synchronization management word.

**3.** A method according to claim 1 or 2, wherein one of said additional synchronization parts (a, b, c) replaces a traffic frame ($T_{12}$, $T_{36}$, $T_{60}$) in a block of the super-frame (ST).

**4.** A method according to claim 1 or 2, wherein the additional synchronization parts (a, b, c) respectively replace traffic frames ($T_{12}$, $T_{36}$, $T_{60}$) in the blocks of the super-frame (ST), at a rate of one traffic frame per block.

**5.** A method according to claim 4, wherein the traffic frames ($T_{12}$, $T_{36}$, $T_{60}$) replaced with the additional synchronization parts (a, b, c) are temporally situated substantially in the middle of the blocks of the super-frame (ST).

6. A method according to claim 1 or 2, wherein one of the additional synchronization parts replaces predetermined bits in predetermined traffic frames in a block of the super-frame (ST).

7. A method according to claim 1 or 2, wherein the additional synchronization parts have sub-parts which have a size less than the size of the traffic frames, and which are distributed in replacement for predetermined bits in traffic frames in the super-frame (ST).

8. A method according to claim 1, 2 or 7, wherein the additional synchronization parts have sub-parts which have a size less than the size of the traffic frames and which are distributed in replacement for bits in traffic frames having predetermined ranks in predetermined blocks of the super-frame (ST).

9. A method according to claim 1, 2 or 7, wherein the additional synchronization parts have sub-parts which have a size less than the size of the traffic frames and which are distributed in replacement for bits in traffic frames included in a block of the super-frame (ST).

10. A method according to any one of claims 6 to 9, **characterized in that** bits in traffic frames of the super-frame (ST) replaced with the additional synchronization parts are least sensitive bits of traffic frames.

11. A method according to any one of claims 1 to 10, wherein the number of consecutive blocks observed in the super-frame (ST) when the synchronization management word is reconstituted, is less than substantially half the number of blocks in the super-frame (ST).

12. A super-frame (ST) comprising a synchronization sequence and formed of digital blocks of digital frames, each block in the super-frame (ST) comprising a slow synchronization part (A, B, C) and at least one traffic frame ($T_2$ to $T_{24}$ or $T_1$ to $T_{24}$), the slow synchronization parts in the super-frame (ST) being different from each other and resulting at least from a decomposition of a synchronization management word (SY), **characterized in that** it comprises additional synchronization parts (a, b, c), each of which is at most in a low proportion different from a respective slow synchronization part (A, B, C) and which are distributed in replacement for bits of traffic frames ($T_{12}$, $T_{36}$, $T_{60}$) in the super-frame (ST), thereby to enable, upon receipt of the super-frame (ST), a reconstitution of the synchronization management word (SY) by observing consecutive blocks in the super-frame (ST) in number strictly less than the number of blocks in the super-frame (ST).

13. A super-frame (ST) according to claim 12, of type AcBaCb in which a, b and c denote additional synchronization parts respectively in low proportions different from slow synchronization parts A, B and C and interleaved with the latter in the super-frame (ST).

14. A super-frame (ST) according to claim 12, of type AcBdCaDb or AdBaCbDc in which a, b, c and d denote additional synchronization parts respectively in low proportions different from the slow synchronization parts A, B, C and D and interleaved with the latter in the super-frame (ST).

15. A sender (EM) able to send a data stream (FDCS) structured into super-frames (ST) each formed of blocks of frames, each block in a super-frame (ST) comprising a slow synchronization part (A, B, C) and at least one traffic frame ($T_2$ to $T_{24}$ or $T_1$ to $T_{24}$), the slow synchronization parts (A, B, C) in the super-frame (ST) being different from each other and resulting at least from a decomposition of a synchronization management word (SY), **characterized in that** it comprises means (GS, UIS) for replacing bits of traffic frames ($T_{12}$, $T_{36}$, $T_{60}$) in the super-frame (ST) by additional synchronization parts (a, b, c), each of which is at most in a low proportion different from a respective slow synchronization part (A, B, C), thereby to enable, by a receiver (RE) receiving the super-frame (ST), a reconstitution of the synchronization management word (SY) by observing consecutive blocks in the super-frame (ST) in number strictly less than the number of blocks in the super-frame (ST).

16. A receiver (RE) able to receive a data stream (FDCS) structured into super-frames each formed of blocks of frames, each block in a super-frame (ST) comprising a slow synchronization part (A, B, C) and at least one traffic frame ($T_2$ to $T_{24}$ or $T_1$ to $T_{24}$), the slow synchronization parts (A, B, C) in the super-frame (ST) being different from each other and resulting at least from a decomposition of a synchronization management word (SY), **characterized in that** it comprises means (CRS) for reconstituting the synchronization management word (SY) by observing consecutive blocks in the super-frame (ST) in number strictly less than the number of blocks in the super-frame (ST) in which additional synchronization parts (a, b, c), each of which is at most in a low proportion different from a respective slow synchronization part (A, B, C), replace bits of traffic frames ($T_{12}$, $T_{36}$, $T_{60}$) in the super-frame (ST).

**EP 1 992 102 B1**

**Patentansprüche**

1. Synchronisationsverfahren, angewendet auf einen Datenstrom (FDCS), der in Überrahmen (ST) strukturiert ist, die jeweils aus Rahmenblöcken gebildet werden, wobei jeder Block in einem Überrahmen (ST) einen langsamen Synchronisationsteil (A, B, C) und mindestens einen Verkehrsrahmen ($T_2$ bis $T_{24}$ oder $T_1$ bis $T_{24}$) umfasst, wobei sich die langsamen Synchronisationsteile (A, B, C) in dem Überrahmen (ST) voneinander unterscheiden und sich aus mindestens einer Zerlegung eines Synchronisationsverwaltungswortes (SY) ergeben, **gekennzeichnet** in dem Überrahmen (ST) durch das Ersetzen (E5) von Verkehrsrahmenbits ($T_{12}$, $T_{36}$, $T_{60}$) in dem Überrahmen (ST) durch zusätzliche Synchronisationsteile (a, b, c), von denen sich jeder höchstens geringfügig von einem jeweiligen langsamen Synchronisationsteil (A, B, C) unterscheidet, um bei einem Empfang des Superrahmens (ST) eine Wiederherstellung des Synchronisationsverwaltungswortes (SY) durch die Beobachtung von aufeinanderfolgenden Blökken in dem Superrahmen (ST) in streng geringerer Anzahl als die Anzahl der Blöcke in dem Überrahmen (ST) zu ermöglichen.

2. Verfahren nach Anspruch 1, wobei mindestens ein zusätzlicher Synchronisationsteil (c; d), der im Wesentlichen von dem Ende des Synchronisationsverwaltungswortes abhängt, in den Überrahmen (ST) nach einem anderen langsamen Synchronisationsteil (A), der von dem Anfang des Synchronisationsverwaltungswortes abhängt, eingefügt wird.

3. Verfahren nach Anspruch 1 oder 2, wobei einer der zusätzlichen Synchronisationsteile (a, b, c) einen Verkehrsrahmen ($T_{12}$, $T_{36}$, $T_{60}$) in einem Block des Überrahmens (ST) ersetzt.

4. Verfahren nach Anspruch 1 oder 2, wobei die zusätzlichen Synchronisationsteile (a, b, c) in den Blöcken des Überrahmens (ST) jeweils Verkehrsrahmen ($T_{12}$, $T_{36}$, $T_{60}$) in einem Umfang von einem Verkehrsrahmen pro Block ersetzen.

5. Verfahren nach Anspruch 4, wobei die Verkehrsrahmen ($T_{12}$, $T_{36}$, $T_{60}$), die durch die zusätzlichen Synchronisationsteile (a, b, c) ersetzt werden, sich zeitlich im Wesentlichen in der Mitte der Blöcke des Überrahmens (ST) befinden.

6. Verfahren nach Anspruch 1 oder 2, wobei einer der zusätzlichen Synchronisationsteile vorherbestimmte Bits in vorherbestimmten Verkehrsrahmen in einem Block des Überrahmens (ST) ersetzt.

7. Verfahren nach Anspruch 1 oder 2, wobei die zusätzlichen Synchronisationsteile Nebenteile aufweisen, die eine geringere Größe aufweisen als die Größe der Verkehrsrahmen und die als Ersatz für vorherbestimmte Bits in Verkehrsrahmen in dem Überrahmen (ST) verteilt sind.

8. Verfahren nach Anspruch 1, 2 oder 7, wobei die zusätzlichen Synchronisationsteile Nebenteile aufweisen, die eine geringere Größe aufweisen die als die Größe der Verkehrsrahmen und die als Ersatz für Bits in Verkehrsrahmen verteilt sind, die vorherbestimmte Stellenwerte in vorherbestimmten Blöcken des Überrahmens (ST) aufweisen.

9. Verfahren nach Anspruch 1, 2 oder 7, wobei zusätzliche Synchronisationsteile Nebenteile aufweisen, die eine geringere Größe aufweisen als die Größe der Verkehrsrahmen und die als Ersatz für Verkehrsrahmenbits verteilt sind, die in einem Block des Überrahmens (ST) enthalten sind.

10. Verfahren nach einem der Ansprüche 6 bis 9, **dadurch gekennzeichnet, dass** Verkehrsrahmenbits in dem Überrahmen (ST), die durch die zusätzlichen Synchronisationsteile ersetzt werden, die unsensibelsten Verkehrsrahmenbits sind.

11. Verfahren nach einem der Ansprüche 1 bis 10, wobei die Anzahl der beobachteten aufeinanderfolgenden Blöcke in dem Überrahmen (ST) bei der Wiederherstellung des Synchronisationsverwaltungswortes (SY) im Wesentlichen weniger als die Hälfte der Anzahl der Blöcke in dem Überrahmen (ST) ist.

12. Überrahmen (ST), umfassend eine Synchronisationssequenz und gebildet aus numerischen Rahmenblöcken, wobei jeder Block in dem Überrahmen (ST) einen langsamen Synchronisationsteil (A, B, C) und mindestens einen Verkehrsrahmen ($T_2$ bis $T_{24}$ oder $T_1$ bis $T_{24}$) umfasst, wobei sich die langsamen Synchronisationsteile in dem Überrahmen (ST) voneinander unterscheiden und sich aus mindestens einer Zerlegung eines Synchronisationsverwaltungswortes (SY) ergeben, **dadurch gekennzeichnet, dass** er zusätzliche Synchronisationsteile (a, b, c) umfasst, von denen jeder sich höchstens geringfügig von einem jeweiligen langsamen Synchronisationsteil (A, B, C) unter-

15

scheidet, und die als Ersatz für Verkehrsrahmenbits ($T_{12}$, $T_{36}$, $T_{60}$) in dem Überrahmen (ST) verteilt sind, um bei einem Empfang des Überrahmens (ST) eine Wiederherstellung des Synchronisationsverwaltungswortes (SY) durch die Beobachtung von aufeinanderfolgenden Blöcken in dem Superrahmen (ST) in einer streng geringeren Anzahl als die Anzahl der Blöcke in dem Überrahmen (ST) zu ermöglichen.

13. Superrahmen (ST) nach Anspruch 12, von der Art AcBaCb, wobei a, b, und c zusätzliche Synchronisationsteile bezeichnen, die sich jeweils geringfügig von den langsamen Synchronisationsteilen A, B und C unterscheiden und mit diesen in dem Überrahmen (ST) verschachtelt sind.

14. Überrahmen (ST) nach Anspruch 12, von der Art AcBdCaDb oder AdBaCbDc, wobei a, b, c und d zusätzliche Synchronisationsteile bezeichnen, die sich jeweils geringfügig von den langsamen Synchronisationsteilen A, B, C und D unterscheiden und mit diesen in dem Überrahmen (ST) verschachtelt sind.

15. Sender (EM), der dazu geeignet ist, einen Datenstrom (FDCS) zu senden, der in Überrahmen (ST) strukturiert ist, die jeweils aus Rahmenblöcken gebildet werden, wobei jeder Block in einem Überrahmen (ST) einen langsamen Synchronisationsteil (A, B, C) und mindestens einen Verkehrsrahmen ($T_2$ bis $T_{24}$ oder $T_1$ bis $T_{24}$) umfasst, wobei sich die langsamen Synchronisationsteile (A, B, C) in dem Überrahmen (ST) voneinander unterscheiden und sich aus mindestens einer Zerlegung eines Synchronisationsverwaltungswortes (SY) ergeben, **dadurch gekennzeichnet, dass** er ein Mittel (GS, UIS) umfasst zum Ersetzen von Verkehrsrahmenbits ($T_{12}$, $T_{36}$, $T_{60}$) in dem Überrahmen (ST) durch zusätzliche Synchronisationsteile (a, b, c), von denen sich jeder höchstens geringfügig von einem jeweiligen langsamen Synchronisationsteil (A, B, C) unterscheidet, um durch einen Empfänger des Superrahmens (ST) eine Wiederherstellung des Synchronisationsverwaltungswortes (SY) durch die Beobachtung von aufeinanderfolgenden Blöcken in dem Superrahmen (ST) in einer streng geringeren Anzahl als die Anzahl der Blöcke in dem Überrahmen (ST) zu ermöglichen.

16. Empfänger (RE), der dazu geeignet ist, einen Datenstrom (FDCS) zu empfangen, der in Überrahmen (ST) strukturiert ist, die jeweils aus Rahmenblöcken gebildet werden, wobei jeder Block in einem Überrahmen (ST) einen langsamen Synchronisationsteil (A, B, C) und mindestens einen Verkehrsrahmen ($T_2$ bis $T_{24}$ oder $T_1$ bis $T_{24}$) umfasst, wobei sich die langsamen Synchronisationsteile (A, B, C) in dem Überrahmen (ST) voneinander unterscheiden und sich aus mindestens einer Zerlegung eines Synchronisationsverwaltungswortes (SY) ergeben, **dadurch gekennzeichnet, dass** er ein Mittel (CRS) umfasst, um das Synchronisationsverwaltungswort (SY) durch die Beobachtung von aufeinanderfolgenden Blöcken in dem Überrahmen (ST) in einer streng geringeren Anzahl als die Anzahl der Blöcke in dem Überrahmen (ST) wiederherzustellen, in dem zusätzliche Synchronisationsteile (a, b, c), von denen jeder sich höchstens geringfügig von einem jeweiligen langsamen Synchronisationsteil (A, B, C) unterscheidet Verkehrsrahmenbits ($T_{12}$, $T_{36}$, $T_{60}$) in dem Überrahmen (ST) ersetzen.

## FIG. 1

EM

GS

GENERATEUR DE
SYNCHRONISATION

SY → AcBaCb

K

SY

Codeur de
parole

SP

Chiffreur

FDC

UNITE D'INSERTION DE
SYNCHRONISATION

FDCS(AcBaCb)

CP

CH

UIS

CT

RE

CRS

CIRCUIT DE
RECUPERATION DE
SYNCHRONISATION

SL(ABC)

SR(AcBaCb)

## FIG. 2

E1

GS : SY → A, B, C

GS : SY → a, b, c

E3

GS : entrelacement
AcBaCb

E4

E2

UIS : ABC dans FDC

UIS : cab dans FDC

E5

E6

UIS → FDCS(AcBaCb) →   CRS

## FIG. 3

ST (p=3, n=24)

SY ≅ ABC

| A1 | T₂ | T₃ | ⟩⟨ | T₂₄ | B25 | T₂₆ | ⟩⟨ | T₄₈ | C49 | T₅₀ | ⟩⟨ | A73 | T₇₄ | ⟩⟨ | B97 |

T₁    T₂₅    T₄₉    T₇₃

bloc

## FIG. 4

AcBaCb

| A1 | T₂ | T₃ | ⟩⟨ | C12 | ⟩⟨ | T₂₄ | B25 | ⟩⟨ | A36 | ⟩⟨ | C49 | ⟩⟨ | B60 | ⟩⟨ | A73 |

T₁₂    T₃₆    T₆₀

bloc

SL  ABC    cab

SR

## FIG. 5

ST (p=4, n=24)

SY ≅ ABCD

| A1 | T₂ | T₃ | ⟩⟨ | T₂₄ | B25 | T₂₆ | ⟩⟨ | T₄₈ | C49 | T₅₀ | ⟩⟨ | D73 | T₇₄ | ⟩⟨ | A97 |

T₁    T₂₅    T₄₉    T₇₃    T₉₇

## FIG. 6

T₁₂    AcBdCaDb    T₃₆

| A1 | T₂ | T₃ | ⟩⟨ | C12 | ⟩⟨ | T₂₄ | B25 | T₂₆ | ⟩⟨ | D36 | ⟩⟨ |

bloc

| T₄₈ | C49 | T₅₀ | ⟩⟨ | A60 | ⟩⟨ | D73 | ⟩⟨ | B84 | ⟩⟨ | A97 |

T₆₀    T₈₄

bloc    bloc

SL  ABCD    cdab

SR

# FIG. 7

ST (p=3, n=24)

ABC

| A1 | T$_1$ | T$_2$ | T$_{24}$ | B25 | T$_{25}$ | T$_{48}$ | C49 | T$_{49}$ | A73 | T$_{73}$ | B97 |

bloc

# FIG. 8

AcBaCb

| A1 | T$_1$ | T$_2$ | C12 | T$_{24}$ | B25 | A36 | C49 | B60 | A73 |

T$_{12}$    T$_{36}$    T$_{60}$

bloc

ABC    cab

SL    SR

# FIG. 9

ST (p=4, n=24)

ABCD

| A1 | T$_1$ | T$_2$ | T$_{24}$ | B25 | T$_{25}$ | T$_{48}$ | C49 | T$_{49}$ | D73 | T$_{73}$ | A97 |

# FIG. 10

ABCD    cdab

SL    SR

T$_{12}$    AcBdCaDb    T$_{36}$

| A1 | T$_1$ | T$_2$ | C12 | T$_{24}$ | B25 | T$_{25}$ | D36 |

bloc

T$_{60}$    T$_{84}$

| T$_{48}$ | C49 | T$_{49}$ | A60 | D73 | B84 | A97 |

## FIG. 11

ST (p=3, n=24)
AcBaCb

| A1 | T₂ | T₃ | ⟩⟨ | T₂₄ | B25 | T₂₆ | ⟩⟨ | T₄₈ | C49 | T₅₀ | ⟩⟨ | A73 | T₇₄ | ⟩⟨ | B97 |

bloc      bloc      bloc

ABC      cab

SL ⌐ABC⌐ SR      cab

## FIG. 12

ST (p=3, n=24)
AcBaCb

| A1 | T₂ | T₃ | ⟩⟨ | T₂₄ | B25 | T₂₆ | ⟩⟨ | T₄₈ | C49 | T₅₀ | ⟩⟨ | A73 | T₇₄ | ⟩⟨ | B97 |

## FIG. 13

ST (p=3, n=24)
A(cba)BC

| A1 | T₂ | T₃ | ⟩⟨ | T₂₄ | B25 | T₂₆ | ⟩⟨ | T₄₈ | C49 | T₅₀ | ⟩⟨ | A73 | T₇₄ | ⟩⟨ | B97 |

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20030037297 A
- WO 2004014019 A
- EP 1209844 A
- WO 20054024786 A
- WO 2004024786 A

**Littérature non-brevet citée dans la description**

- NIST Special Publication 800-38A. Recommendation for Block Cipher Modes of Operation - Methods and Techniques. 2001
- Terrestrial Trunked Radio (TETRA) ; Security. *Synchronization mechanism for end-to-end encrytion,* Juin 2003, 1-17